# EUROPEAN PATENT SPECIFICATION

(11) **EP 0 496 693 B1**
(45) Date of publication and mention of the grant of the patent: **11.09.1996**
(21) Application number: 92610007.4
(22) Date of filing: 24.01.1992
(51) Int. Cl.: A23B 4/28

(54) **Method and equipment for monitoring and controlling apparatus for injecting**
Verfahren und Apparatur zur Überwachung und Kontrolle von Injektionsgeräten
Méthode et appareil pour surveillance et contrôle des appareils d'injection

(30) Priority: 24.01.1991 DK 127/91
(43) Date of publication of application: 29.07.1992
(73) Proprietor: SCANIO A/S, DK-9000 Aalborg (DK)
(72) Inventor: Laurbak, Kristen, DK-9210 Aalborg SO (DK)
(74) Representative: Pedersen, Soeren Skovgaard

(56) References cited:
- DE-A- 3 420 019
- FR-A- 2 628 941
- GB-A- 2 181 035
- DATABASE WPIL Section Ch, Week 8339, 1983 Derwent Publications Ltd., London, GB; Class D, AN 83-776319

## Description

The present invention concerns a method for surveillance and controlling a process equipment, in particular an injector, (apparatus for injecting brine, pickle or another liquid into meat) and an equipment for use in connection therewith.

When curing hams by a so-called injector, whereby brine is injected into the meat, full control of the process is vital due to the stipulated requirements. The consumer demand is for a uniform product of high quality. Due to quality reasons and in consideration of the consumers a maximum has been set for the quantity of the injected brine, and the quality demands a certain minimum. Consequently both a maximum and minimum requirement exist where the producer for reasons of optimum economy is interested in being so close to the maximum requirement as absolutely possible, but without exceeding it which causes a lower price for the product or at worst a rejection. A better profit can also be ensured by a uniform product which in addition may be consolidated if the products can be supplied holding a quality certificate.

Documents FR-A-2 628 941 and DE-A-3 420 019 disclose processes for brine injection into meat.

The object of the invention is to provide a solution to the problem outlined above. The solution according to the invention is characteristic in that in connection with the feeding end and the outlet of the processing equipment there are flow scales where the first one records the weight before entering into the equipment and the second records the weight upon processing the items and where the signals from the two scales are used for a continued surveillance and recording of the process and controlling of the equipment. In order to do this, the results from the entering scales are delayed until they are synchronous with the outlet scales, upon which a percentage of yield can be calculated. This percentage of yield is then fed to the apparatus or process equipment, which might possibly correct its operating parameters. By connecting a suitable printer equipment each batch can be provided with a certificate based on the printout.

Thus it is possible in an injector to carry out a continuous adjustment of the injection of brine such that it is so close to maximum as is possible at the same time ensuring a uniform product. When correcting the injector the liquid pressure in the needles and the pulse are adjusted, i.e. number of cycles of the needle head and hence the speed of the belt. The speed of the belt of the flow scales is controlled synchronously to this based on the pulses of the injector. In case of instability an alarm can be raised indicating that the basic position for this product needs changing. It should be realized that the invention is not limited to application in connection with an injector but may be applied in any food process where an increase or a decrease can occur. The latter example could for instance be a dehydration where the water content is required reduced to a certain lower level, which may not be lowered.

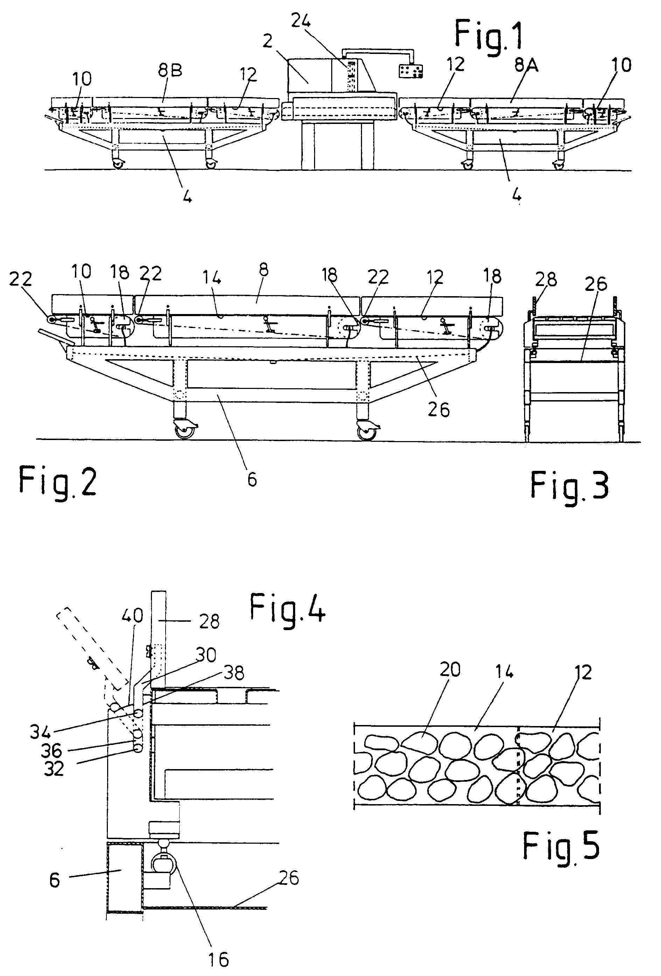

The invention shall be described in further detail in the following with reference to the attached drawing in which an embodiment of an equipment according to the invention is outlined. The drawing illustrates:-
Fig. 1 a lateral view of an equipment according to the invention,
Fig. 2 a weighing unit of the equipment with flow scales,
Fig. 3 a direct end view of the weighing unit,
Fig. 4 an enlarged detail of the weighing unit,
Fig. 5 a schematic section of the flow through the equipment.

The equipment illustrated in the drawing comprises a per se known injector 2 as well as two essentially identical weighing units 4, one at the inlet of the injector and one at its outlet. These units are constructed on a wheeled frame 6, such that they can be driven away for say cleaning and servicing. The units comprise flow scales 8 as well as a belt conveyor 10, 12 before and after. The flow scales comprise a belt conveyor 14 supported at the frame by a weighing cell 16 at each corner. The motors of the conveyors are synchronized such that the belt speeds are identical. Thereby interferences of the flow scales can be avoided as a consequence of differing speeds of the flow to and from the flow scales. The equipment is thus made independent of the speed of the belt in the injector. The passage of the pieces of meat from the belt conveyor 10 to the flow scales 8 and further to the subsequent conveyor 12 is a disturbing phase to the weighing. This has been countered by the flow scales having a suitable excess length in relation to the pieces of meat 20 to be cured. A length of two to five times or three times that of the maximum size of the pieces of meat proves suitable. Furthermore the passage between the belt conveyors and the flow scales has been reduced by placing a turning roller 22 with a small diameter at a belt in connection with the drum motor 18 with a considerably larger diameter, approx. four times that of the adjacent belt.

The impulses from the weighing cells 16 can be utilized for controlling the injector 2. If the increase is too small, it can be adjusted to inject more brine, e.g. by increasing the pressure in the brine or by increasing the pulse, i.e. number of cycles of the needle head 24 which is displaced approx. 50 mm in the direction of movement of the belt. The slower pulses, the larger injections because the speed of the belt is slow and vice versa the faster the pulses the lesser the injections. The pulse can for instance be varied from 0-60 pulses/min.

A weighing is performed by the first flow scales 8A, and after a predestined period of time determined by the speed of the flow the same stretch of the flow is at the next scales 8B and is weighed again, upon which it is possible to calculate the absolute increase and the percentage of increase. The weighing is performed at short intervals; the shorter intervals the higher accuracy in controlling the increase, on the other hand there is a lower limit to the frequency of the weighings. The lower limit is set partly by the inaccuracies of the system and partly by the accuracy with which the injector can be adjusted. It is important that the controlling is arranged such that the allowed maximum increase is not exceeded.

Based on these weighing results a certificate can be issued for a given batch of meat indicating bibliographical data such as producer, time, type of meat, type of brine etc. as well as a printout of the weighing results. The latter might just be a printout of the main results, i.e. total weight, total increase and percentage of increase with an obligation for the producer to retain the weighing results a certain period of time after the printout. The calculations and the printout can be drawn from a computer connected to the equipment.

A batch processed through the equipment may be e.g. six tons of meat and the curing time is approximately a couple of hours. Before the process is initiated the flow scales are calibrated which can be done by running a previously weighed quantity, say one hundred kilos of meat through the equipment, of course without submitting it to any kind of curing. The equipment is arranged such that a control of the zero setting can be carried out, e.g. manually or automatically when periodically no meat is present at the scales, which can be recorded automatically. The control weighing takes place within a fraction of a second and does not interfere with the process at all. During the process compensation can thus be made for the adhesion that will always stick to the scales such as meat juice, shreds of meat etc.

Below the belts 10, 12 and the flow scales 8 is placed a drip pan 26 for the meat juice leaking from the meat during the passage. This meat juice is recorded as part of the weight. When entering at the injector the weight is therefore less than the recorded weight due to leaked meat juice. This meat juice is collected and subsequently added to the meat such that the total weight is in accordance with the recorded. The meat juice is integrated in the further curing of the meat.

In the lateral direction the conveyor belts are defined by side walls 28 detachably mounted to the frame. The side walls are supported at vertical bars 30 by two horizontal pivots 32, 34 where the lowermost is accommodated into a slot 36 in the frame. The other one is likewise accommodated in a slot 38 which is open upwardly and which continues into a curving space 40, such that the side wall can be lifted somewhat limited by the length of the lower slot and tipped outwardly where the uppermost pivot enters the curving space to a parking position. When detaching a side wall it is simply longitudinally displaced such that the pivots disengage from the slots.

## Claims

1. A method for surveillance and controlling of an increase or a decrease in a flow of disarranged items that are cured in a processing equipment, in particular an injector (2), by which scales (8A, 8B) are arranged in connection with the feeding end and the outlet end of the processing equipment, where the first scales record the weight before entering the equipment, and the second records the weight after processing the items, characterized in that the items are fed in a continuous flow to the processing equipment and that flow scales are used where the signals from the two scales are used for a continuous surveillance and recording of the process and controlling the machine or process equipment.

2. A method according to claim 1, characterized in that the collected data constitute the base for a print-out of a certificate for a well-defined batch of items.

3. An equipment for using the method according to claim 1, comprising an injector (2) and a scale (8A) in connection with the inlet hereto and a scale (8B) at the outlet for weighing disarranged items before and after processing in the injector, characterized in that the scales are flow scales (8A, 8B) connected with a computer for collecting and processing of the weighing results with a view to printing out a certificate for a batch of items and where the signals from the flow scales also are utilized for controlling the injector.

4. An equipment according to claim 3, characterized in that the two flow scales (8A, 8B) per se are identical.

5. An equipment according to claims 3 or 4, characterized in that the lengths of the flow scales correspond to two to five times the maximum lengths of the items, preferably three times.

6. An equipment according to claims 3, 4 or 5, characterized in that before and after each of the flow scales (8A, 8B) there is a belt conveyor (10, 12) the speed of belt of which is synchronous with the speed of belt of the flow scales.

7. An equipment according to claims 3, 4, 5 or 6, characterized in that the belts are arranged such that a turning roller (22) having a small diameter is placed at the pulling roller (18) having a larger diameter.

8. An equipment according to claims 6 or 7, characterized in that the belt conveyors (10, 12) and the flow scales (8) are integrated into a unit at a wheeled frame.

9. An equipment according to claims 3, 4, 5, 6, 7 or 8, characterized in that the belts in their lateral direction are defined by a side wall (28) supported by bars (30) having two horizontal pivots (32, 34) that are accommodated into slots (36, 38) in the frame where the uppermost one is open upwardly and continues into a curving space (40) such that the side wall can be tilted obliquely outwardly, and possibly be removed by a longitudinal displacement where the pivots disengage their contacts.

## Patentansprüche

1. Ein Verfahren zum Kontrollieren und Steuern eines Ansteigens oder Absinkens eines Flusses ungeordneter Gegenstände, die in einer Behandlungseinrichtung haltbar gemacht werden, insbesondere einem Injektor (2), bei dem Waagen (8A, 8B) in Verbindung mit dem Zuführende und dem Auslaßende der Behandlungseinrichtung angeordnet sind, wobei die erste Waage das Gewicht vor Eintritt in die Einrichtung und die zweite das Gewicht nach Bearbeitung der Gegenstände erfaßt, dadurch gekennzeichnet, daß die Gegenstände der Behandlungseinrichtung in einem kontinuierlichen Fluß zugeführt werden und daß Durchlaufwaagen eingesetzt werden, wobei die Signale von den beiden Waagen für eine kontinuierliche Kontrolle und Erfassung des Verfahrens und für eine Steuerung der Maschine oder der Verfahrenseinrichtung verwendet werden.

2. Ein Verfahren nach Anspruch 1, dadurch gekennzeichnet, daß die gesammelten Daten die Basis für einen Ausdruck eines Zertifikats für eine eindeutig bestimmte Menge Gegenstände bilden.

3. Eine Einrichtung zu Anwendung des Verfahrens nach Anspruch 1, umfassend einen Injektor (2) und eine Waage (8A) in Verbindung mit einem Einlaß dafür und einer Waage (8B) am Auslaß zum Wiegen ungeordneter Gegenstände vor und nach Behandlung in dem Injektor, dadurch gekennzeichnet, daß die Waagen Durchlaufwaagen (8A, 8B) sind, die mit einem Computer zum Sammeln und Verarbeiten der Wägeergebnisse verbunden sind, um ein Zertifikat für eine Menge Gegenstände auszudrucken, und wobei die Signale von den Durchlaufwaagen weiterhin verwendet werden, um den Injektor zu steuern.

4. Eine Einrichtung nach Anspruch 3, dadurch gekennzeichnet, daß die beiden Durchlaufwaagen (8A, 8B) per se gleich sind.

5. Eine Einrichtung nach Anspruch 3 oder 4, dadurch gekennzeichnet, daß die Länge der Durchlaufwaagen zwei- bis fünfmal, vorzugsweise dreimal der maximalen Länge der Gegenstände entspricht.

6. Eine Einrichtung nach einem der Ansprüche 3, 4 oder 5, dadurch gekennzeichnet, daß vor und nach jeder der Durchlaufwaagen (8A, 8B) ein Bandförderer (10, 12), dessen Bandgeschwindigkeit synchron zu der Geschwindigkeit des Bandes der Durchlaufwaagen ist, vorgesehen ist.

7. Eine Einrichtung nach einem der Ansprüche 3, 4, 5 oder 6, dadurch gekennzeichnet, daß die Bänder derart angeordnet sind, daß eine einen kleinen Durchmesser aufweisende Umkehrwalze (22) an der einen größeren Durchmesser aufweisenden Zug- bzw. Antriebswalze (18) angeordnet ist.

8. Eine Einrichtung nach Anspruch 6 oder 7, dadurch gekennzeichnet, daß die Bandförderer (10, 12) und die Durchlaufwaagen (8) in eine Einheit an einem Rollen-Rahmen integriert sind.

9. Eine Einrichtung nach einem der Ansprüche 3, 4, 5, 6, 7 oder 8, dadurch gekennzeichnet, daß die Bänder in ihrer lateralen Richtung durch eine Seitenwand (28) definiert sind, die von Trägern (30) mit zwei horizontalen Schwenkpunkten (32, 34) gestützt wird, die in Schlitzen (36, 38) in dem Rahmen aufgenommen sind, von denen der oberste nach oben offen ist und sich in einen gekrümmten Raum (40) derart fortsetzt, daß die Seitenwand schräg nach außen gekippt und gegebenenfalls durch eine Längsverlagerung dort, wo sich die Schwenkpunkte von ihren Kontakten lösen, entfernt werden kann.

## Revendications

1. Procédé pour la surveillance et le contrôle d'une augmentation ou d'une diminution dans un flux d'articles en désordre qui sont traités dans un appareillage de traitement, en particulier un injecteur (2), dans lequel des balances (8A,8B) sont agencées en liaison avec l'extrémité d'alimentation et l'extrémité de sortie de l'appareillage de traitement, la première balance enregistrant le poids avant l'entrée dans l'appareillage et la seconde enregistrant le poids après le traitement des articles,
caractérisé en ce que les articles sont amenés en un flux continu à l'appareillage de traitement, et en ce que des balances de flux sont utilisées, les signaux provenant des deux balances étant utilisés pour une surveillance et un enregistrement continus du processus et la commande de la machine ou de l'appareillage de traitement.

2. Procédé selon la revendication 1,
caractérisé en ce que les données recueillies constituent la base pour l'impression d'un certificat pour un lot bien défini d'articles.

3. Appareillage pour mettre en oeuvre le procédé selon la revendication 1, comprenant un injecteur (2) et une balance (8A) en liaison avec l'entrée de celui-ci et une balance (8B) à la sortie pour peser des articles en désordre avant et après le traitement dans l'injecteur,
caractérisé en ce que les balances sont des balances de flux (8A,8B) reliées à un calculateur pour recueillir et traiter les résultats de pesage en vue d'imprimer un certificat pour un lot d'articles et où les signaux provenant des balances de flux sont également utilisés pour commander l'injecteur.

4. Appareillage selon la revendication 3,
caractérisé en ce que les deux balances de flux (8A,8B) sont en soi identiques.

5. Appareillage selon les revendications 3 ou 4,
caractérisé en ce que les longueurs des balances de flux correspondent à deux à cinq fois les longueurs maximales des articles, de préférence trois fois.

6. Appareillage selon les revendications 3, 4 ou 5,
caractérisé en ce que, avant et après chacune des balances de flux (8A,8B), il existe un transporteur à bande (10,12), dont la vitesse de bande est synchrone avec la vitesse de bande des balances de flux.

7. Appareillage selon les revendications 3, 4, 5 ou 6,
caractérisé en ce que les bandes sont agencées de sorte qu'un rouleau de rotation (22) ayant un petit diamètre est placé au niveau du rouleau de traction (18) ayant un plus grand diamètre.

8. Appareillage selon les revendications 6 ou 7,
caractérisé en ce que les transporteurs à bande (10,12) et les balances de flux (8) sont intégrés en une unité sur un bâti à roues.

9. Appareillage selon les revendications 3, 4, 5, 6, 7 ou 8,
caractérisé en ce que les bandes, dans leur direction latérale, sont définies par une paroi latérale (28) supportée par des barres (30) ayant deux pivots horizontaux (32,34) qui sont reçus dans des fentes (36,38) dans le bâti où la plus supérieure est ouverte vers le haut et se poursuit en un espace incurvé (40) de sorte que la paroi latérale peut être basculée obliquement vers l'extérieur et, éventuellement, être retirée par un déplacement longitudinal où les pivots désengagent leurs contacts.
